# FASCICULE DE BREVET EUROPEEN

(11) **EP 0 562 103 B1**
(45) Date de publication et mention de la délivrance du brevet: **18.09.1996**
(21) Numéro de dépôt: 92923014.2
(22) Date de dépôt: 13.10.1992
(51) Int. Cl.: A47J 39/00, G07F 9/10

(54) **DISPOSITIF DE REFRIGERATION ET DE CUISSON OU DE REMISE EN TEMPERATURE D'ALIMENTS POUR LA DISTRIBUTION AUTOMATIQUE DE REPAS**
VORRICHTUNG ZUM KÜHLEN UND KOCHEN ODER ERWÄRMEN VON AN AUTOMATEN AUSGEGEBENEN GERICHTEN
DEVICE FOR REFRIGERATING AND COOKING OR REHEATING FOOD FOR AUTOMATICALLY DISPENSING MEALS

(30) Priorité: 14.10.1991 FR 9112725
(43) Date de publication de la demande: 29.09.1993
(73) Titulaire: GRANDI, René, I-20060 Campione d'Italia (IT)
(72) Inventeur: GRANDI, René, I-20060 Campione d'Italia (IT)
(74) Mandataire: Roman, Michel
(86) Numéro de dépôt international: FR9200961
(87) Numéro de publication internationale: WO9307795

(56) Documents cités:
- FR-A- 2 209 285
- FR-A- 2 266 864
- FR-A- 2 413 900
- GB-A- 2 074 434
- US-A- 2 066 865
- US-A- 3 205 033

## Description

Il est connu de nombreux dispositifs réfrigérants permettant la remise en température des produits alimentaires à distribuer. Dans ces appareils, bien qu'il existe des barrières thermiques fixes ou amovibles, les frigories cohabitent avec les calories

Par exemple, le document FR-A-2 209 285 décrit un système utilisant des plateaux-repas dont une partie est destinée à revevoir des mets chauds et une seconde partie destinée à recevoir des mets froids, lesdits plateaux étant associés à une armoire de stockage et de conservation comportant une zone réchauffée par résistances électriques pour les mets chauds, et une zone réfrigérée par un groupe de froid pour les mets froids. Ces deux zones étant séparées thermiquement par une cloison souple formées de fibres s'insérant dans des rainures prévues à cet effet sur les deux faces de chaque plateaux-repas, entre la partie réservée aux mets chauds et la partie réservée aux mets froids.

D'autres dispositifs comportent une seule enceinte où les produits sont en attente dans une ambiance réfrigérée puis à un moment donné la réfrigération s'arrête laissant place au système de chauffe (résistance, air pulsé) pour cuire ou réchauffer le menu en attente.

Bien que donnant satisfaction, ces dispositifs nécessitent une mise en oeuvre importante soit dans l'isolation, soit dans la capacité de réfrigération et d'aspiration des turbines afin de recycler les calories dans des échangeurs de froid. Car le groupe de froid est très sollicité par sa cohabitation avec la chaleur , et est limité par rapport aux calories (1 frigorie égale 2 calories) cela entraîne un surchauffage des produits en attente qui doivent être en froid. Ceci limite également la capacité de contenance en plateaux ou en mets du dispositif, leur nombre augmentant le débit de réfrigération.

Le dispositif objet de l'invention évite ces inconvénients, et tout en permettant de séparer l'enceinte réfrigérée de l'enceinte chaude, il permet la maintenance réfrigérée du plat en attente de chauffe.

Il permet également une mise en température des produits dans un laps de temps assez court, car la mise en chauffe est mobile et en mouvement, par la prise en charge chauffante pendant la rotation du plat, dès sa pénétration dans la zone de chauffe.

Il est scindé en deux parties : une zone de stockage en froid et une zone chauffante. Les deux parties sont séparées entre elles par des barrières thermiques empêchant le chaud d'entrer dans le froid.

La zone réfrigérée comporte des étagères recevant des plateaux-repas ou support-plateaux dont une partie supporte les aliments ou des repas préconditionnés destinés à être cuits ou réchauffés.

Chaque support-plateau est amovible et dépend d'un axe lui permettant une rotation. Cet axe situé de façon centrée à un côté du support-plateau , comporte un électro-aimant par étagère commandant des clavettes qui entraînent le ou les support-plateaux correspondant au menu choisi.

Plusieurs clavettes peuvent être enclenchées en même temps sur le même axe qui comporte autant d'orifices ou de cannelures pour permettre de saisir plusieurs support-plateaux à la fois. Un moteur réducteur, relayé à un pupitre de commandes, est situé à la base de l'axe et lui permet toutes ces fonctions.

La zone d'attente réfrigérée en permanence permet le stockage des plateaux en attente de cuisson ou de remise en température.

Le chargement de cette zone peut s'effectuer par l'arrière du dispositif pour ne pas gêner la zone de réception destinée au consommateur, il peut se faire également par inversion de marche. Chaque support-plateau dont par la partie pénètre dans la zone chaude, peut comporter un menu différent ou un plat tel que pizza, croque-monsieur, oeuf sur plat, cassoulet, couscous, paella etc... avec gratinage ou pas.

Une fois le menu choisi, l'électro-aimant correspondant enclenche la clavette du support-plateau dans les cannelures de l'axe et lui permet ainsi d'effectuer une semi-rotation, pour faire pénétrer uniquement la partie à réchauffer dans la zone de cuisson ou de remise en température tout en gardant toujours en zone réfrigérée la partie du support-plateau contenant les denrées froides (hors d'oeuvres, desserts) etc... Le système de chauffe se met en marche dès que le support-plateau aura pénétré dans la zone chauffante, commençant ainsi à cuire ou à réchauffer les produits jusqu'au point terminal de la zone d'extraction, où un contact "fin de course" relié à l'électro-aimant libère la clavette du support-plateau pour en terminer la rotation.

Le cycle de réchauffement est programmé suivant l'importance du temps de cuisson ou de remise en température, et suivant la puissance thermique indiquée selon l'aliment à traiter.

La remise en température étant terminée, le support-plateau se présente devant la porte de distribution pour être saisi par le consommateur.

Une programmation permet la sélection du contenu du support-plateau, le temps de remise en température ainsi que l'ouverture de la porte pour la distribution au consommateur, déterminant ainsi la vitesse du mouvement de rotation.

La zone de chauffe peut être constituée comme un grand et unique four à chaleur pulsée, par résistances électriques ou par micro-ondes, avec des infra-rouges pour le gratinage, mais elle peut également comporter un moyen de chauffe individuel correspondant à chaque étagère, étant donné que chaque plateau est indépendant et peut être sélectionné individuellement.

Les moyens de chauffe peuvent être variés et chauffer le plat aussi bien par le haut que par le bas, Ces moyens peuvent être traditionnels, comme les résistances électriques, des rails chauffants à halogène ou un micro-ondes, ayant la capacité de cuire ou réchauffer très rapidement, avec des barreaux infra-rouges pour le gratinage.

Pendant sa course de rotation, la zone réfrigérée est séparée de la zone chaude, au niveau du plateau, par un joint de caoutchouc alimentaire qui vient plaquer sur le dessus du support-plateau, qui lui-même comporte une déformation venant épouser le joint. Ce joint à pression ressort est à pression constante, et sépare en permanence hermétiquement la zone chaude de la zone réfrigérée, il se soulève lors de la pénétration du plateau dans la zone chaude . Ce dernier ainsi que la déformation sur le plateau est de forme incurvée pour suivre la rotation du plateau. La zone réfrigérée est également préservée lors de la phase finale de distribution du plateau, par le même type de joint à pression ressort et également incurvé, il vient plaquer sur la déformation du plateau.

Ce joint formant "guillotine" peut être relevé manuellement pour extraire le plateau, mais il peut comme le joint intérieur, être relié à la programmation et synchronisé pour s'ouvrir et se fermer automatiquement.

De même, au niveau du passage du plat à réchauffer, des "brosses" supérieures et inférieures à déformation souple permettent le passage du plat tout en préservant séparément le chaud du froid. Ces brosses sont constituées par des sortes de crins souples, épais et mobiles venant s'imbriquer les uns dans les autres, supérieurs et inférieurs, en formant une paroi souple mobile et isolante.

La séparation de la zone chaude de la zone réfrigérée peut se faire à tous les niveaux (passage du plat, plateau et extraction) soit totalement avec les brosses souples, soit totalement avec les joints à pression ressort, ou bien les deux comme cité ci-dessus.

Ces différents moyens de barrières thermiques comme les joints, la porte "guillotine" et les brosses sont clipsés pour être facilement et rapidement démontables pour être impérativement nettoyés de façon quotidienne. Pour protéger les aliments à chaufferlors du passage sous la barrière thermique des brosses, chaque plat est recouvert d'une grille, laissant passer les infra-rouges pour le gratinage.

Un compresseur de froid permet la réfrigération de la zone réfrigérée du dispositif. Une turbine tangentielle permet également d'aspirer et de recycler l'excès de température dans la zone chauffante du dispositif.

Dans ce dispositif, divers conditionnements peuvent être utilisés comme entre autres des barquettes ou des assiettes en porcelaine.

L'utilisation de ce dispositif peut être envisagée dans de nombreux domaines, tels que des lieux de travail, de loisirs ou comme compléments dans diverses formes de restauration.

Une autre variante de distribution peut être envisagée par ce dispositif qui peut être conçu comme un distributeur automatique pouvant être adapté aux lieux de restauration rapide comme un "self-service", un bar, etc... où le menu, allant des oeufs sur le plat au steak grillé, serait cuit immédiatement devant le client.

Les moyens pour la rotation de l'axe par clavette et électro-aimant restant identiques ainsi que les moyens de chauffe. Le distributeur, pouvant être commandé soit par monnayeur ou par jetons.

Le dispositif objet de cette invention sera bien compris à l'aide de la description qui suit, en référence aux dessins ci-annexés, représentant à titre d'exemples non limitatifs, plusieurs formes d'exécutions de ce dispositif.

La figure 1 est une vue en coupe transversale intérieure et en profondeur d'une étagère du dispositif dans une position correspondante à une phase d'un cycle de remise en température des aliments.

La figure 2 représente une vue en coupe longitudinale de deux étagères à support-plateau, chacune dans une phase différente de positionnement.

La figure 3 comporte trois schémas montrant les brosses mobiles lors du passage du plat.

La figure 4 représente le schéma vu de dessus du positionnement du support-plateau dans plusieurs de ses phases.

La figure 5 est une vue de positionnement du support-plateau, identique à la figure 3, mais jumelé côte à côte, permettant une double capacité au dispositif.

La figure 6 représente le dispositif vu de face et en coupe avec diverses étagères.

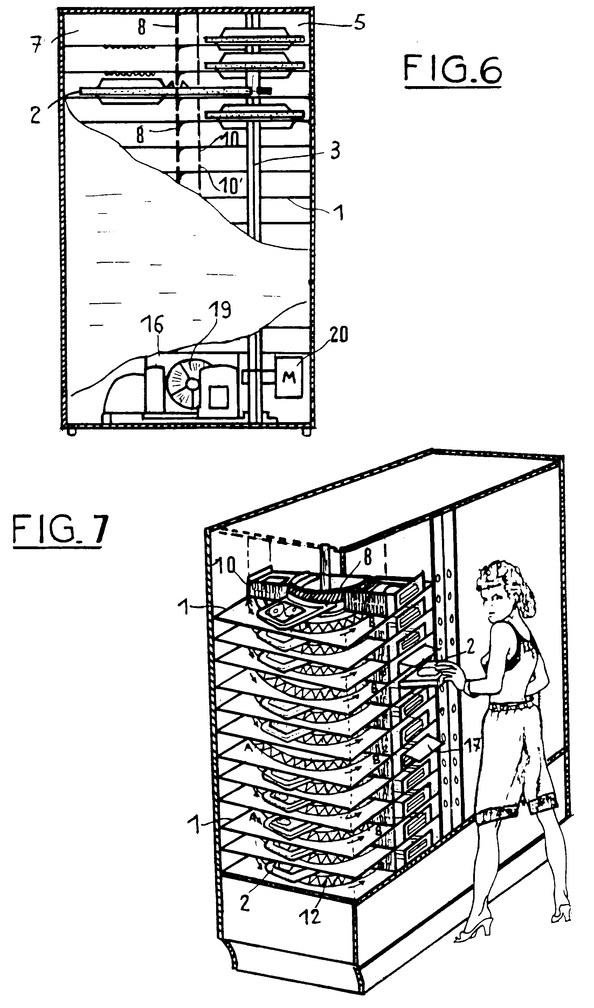

Le dispositif de la figure 7 est représenté dans son ensemble avec un aperçu en éclaté de la zone de chauffe en mode d'utilisation.

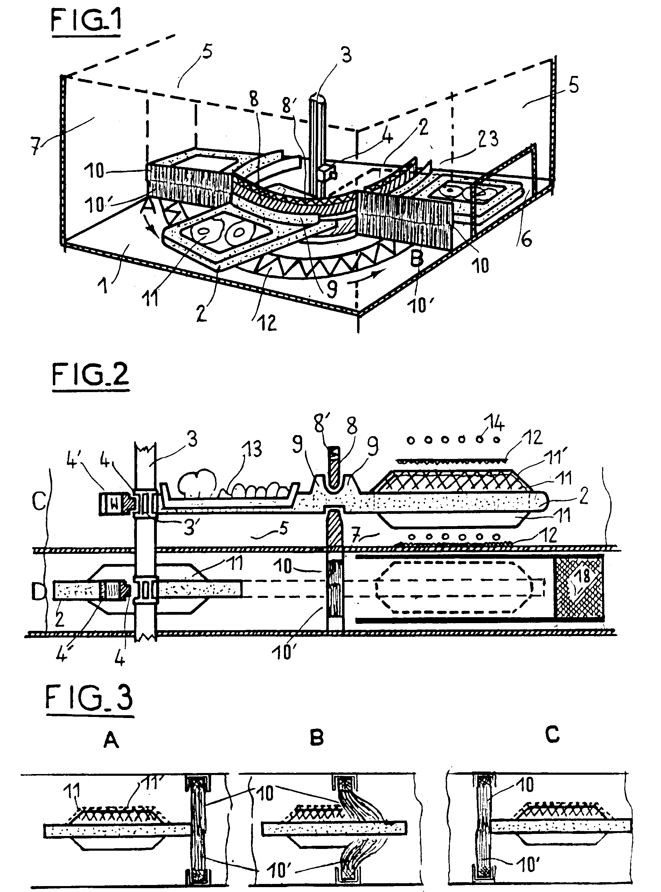

Sur la FIG 1, le plan d'une étagère 1 comporte un support-plateau 2, l'axe 3 permet par la clavette 4 de saisir le support-plateau 2 et de lui faire effectuer un mouvement giratoire à partir de la zone réfrigérée 5 jusqu'à sa sortie 6 au consommateur.

La zone réfrigérée 5 est séparée de la zone de cuisson ou de remise en température 7 par un joint 8 à pression ressort 8' insérant le support-plateau 2 qui présente également une déformation 9 recevant le joint 8. Ce joint 8 et la déformation 9 dont de forme incurvée pour suivre la rotation du support-plateau 2.

Des brosses supérieures 10 et inférieures 10' permettent le passage du plat 11 tout en isolant la zone réfrigérée 5 de la zone chaude 7.

Le rail chauffant 12 prend en charge de chauffe le plat 11, dès son entrée A dans la zone chaude 7, selon le temps qui aura été programmé et adéquat au produit à chauffer, jusqu'au contacteur 23 de fin de course B qui alors débraye l'électro-aimant 4' et libère la clavette 4 du support-plateau.

Sur l'étagère C de la fig 2, l'axe comporte des cannelures 3' pour permettre à l'électro-aimant 4' de venir enclencher la clavette 4 pour saisir le support-plateau 2 et permettre sa rotation pour la mise en chauffe du plat 11 dans la zone chaude 7.

Les plats de la partie 13 du support-plateau , comme les hors d'oeuvres ou desserts restent toujours en froid dans la zone réfrigérée 5.

Le joint 8 est inséré dans la déformation 9 du support-plateau, formant une isolation entre les deux zones 5 et 7. Sur cette figure le plat 11, protégé par sa grille 11' est chauffé par dessus et par dessous par deux rails chauffants 12, des infra-rouges 14 permettent le gratinage en fin de course.

Sur l'étagère D de la fig 2, le plat 11 est en attente dans la zone réfrigérée 5, la clavette 4 n'est pas enclenchée dans la cannelure 3' de l'axe 3 laissant le plateau 2 libre. On aperçoit les brosses isolantes 10 et 10' du passage du plat 11. Un magnétron 18 à micro-ondes est montré pour une autre forme de chauffe.

Sur la fig 3 la phase A montre les brosses souples supérieures 10 et inférieures 10' formant une barrière thermique avant que le support-plateau 2, le plat 11 et sa grille 11' ne pénètrent dans la zone chaude 7.

En phase B les brosses 10, 10' viennent épouser la forme du plat 11 et de la grille 11' tout en gardant leur fonction isolante. En phase C les brosses 10, 10' reprennent leur position normale.

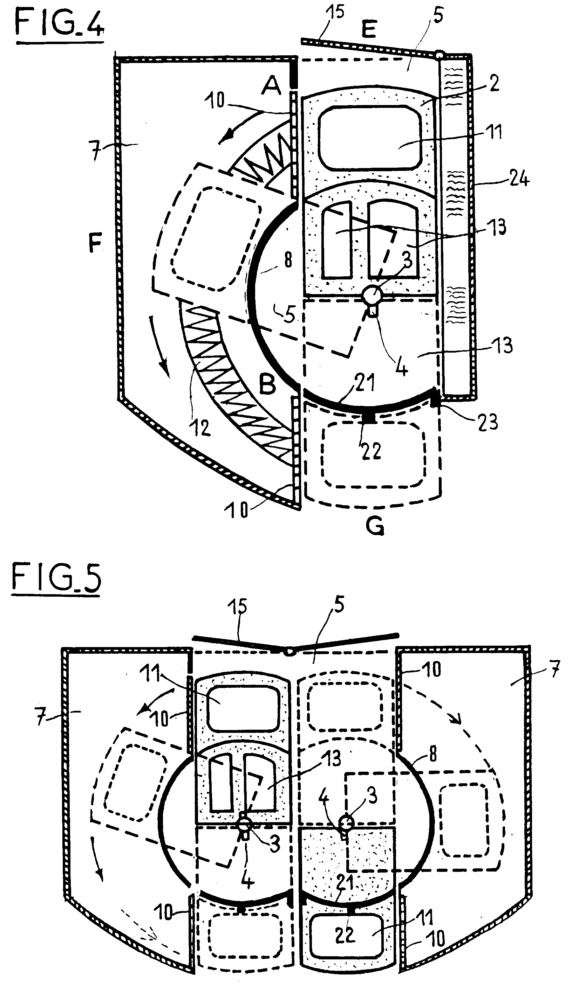

Sur les fig 4 et 5, on peut observer les différentes phases de rotation du support-plateau et de son plat 11 à réchauffer, la partie 13 représente les alvéoles recevant les produits restant réfrigérés.

En phase E le support-plateau 2 a été introduit par la porte 15 et reste en attente dans la zone réfrigérée 5, l'évaporateur 24 du compresseur de froid assure une parfaite réfrigération.

En phase F, après avoir reçu la commande, par la programmation, le support-plateau 2 a pénétré dans la zone chaude 7 en traversant les brosses 10. La mise en chauffe sur le rail chauffant 12 commence dès l'entrée A jusqu'à la sortie B du support-plateau 2 dans la zone chaude 7.

En phase G le support-plateau 2 a terminé sa course, la barrière "guillotine" 21 préserve ici la zone réfrigérée 5 de l'extérieur, une poignée 22 permet le relevage de la barrière guillotine pour extraire le plateau.

Pendant tout le traitement de chauffe, la partie 13 du plateau reste toujours en froid, le joint 8 a préservé la zone réfrigérée 5 de la zone chaude 7.

La fig 5 présente une autre forme d'exécution du dispositif, avec une double capacité de distribution, la zone réfrigérée 5 étant alors commune aux deux capacités.

Le schéma de la fig 6 montre des étagères 1 comportant des support-plateaux 2 dont un est en instance de chauffe dans la zone chaude 7, les autres sont en attente dans la zone 5. Les joints 8 et les brosses 10 et 10' séparent les deux zones. Un moteur 20 permet la rotation de l'axe 3 qui par la clavette 4 enclenchée entraîne la rotation du plateau 2. A la base du dispositif un compresseur de froid 16 avec turbine tangentielle 19 de ventilation et évaporateur, assure la réfrigération du dispositif.

Sur l'éclaté de la fig 7 on peut voir diverses rangées d'étagères 1 avec des rails chauffants 12, les joints 8 et les brosses 10, les support-plateaux 2 sont chacun à une phase de traitement différente. Chaque support-plateau aboutit à son issue par sa porte 17.

Toutefois, les formes, les dimensions, les dispositions ainsi que les moyens mis en oeuvre pour la réalisation du dispositif qui vient d'être décrit, pourront varier dans la limite des équivalents.

## Revendications

1. Dispositif de réfrigération et de cuisson ou de remise en température d'aliments pour la distribution automatique de plats ou de plateaux-repas permettant de sélectionner à la demande la cuisson ou la remise en température d'un ou plusieurs plats (11) stockés en attente dans une zone réfrigérée (5),
caractérisé en ce qu'il comporte des supports-plateaux (2) aptes à tourner autour d'un axe (3) vertical et agencés de manière à ce que la cuisson ou remise en température d'un plat (11) s'effectue au cours d'un mouvement de rotation du support-plateau (2) sur lequel est placé ledit plat faisant passer ce dernier dans une zone de chauffe (7) du dispositif, depuis un point de pénétration (A) jusqu'à sa fin de course (B), tout en maintenant une partie (13) du support-plateau dans la zone réfrigérée (5).

2. Dispositif selon la revendication 1,
caractérisé en ce qu'un rail chauffant (12) prend en charge la chauffe du plat (11) sur tout le parcours de son mouvement de rotation, dès sa pénétration dans la zone de chauffe (7).

3. Dispositif selon la revendication 1,
caractérisé par un électro-aimant (4') permettant à une clavette (4) solidaire et située au centre d'un des bords d'un plateau-support (2), de venir s'enclencher dans les cannelures (3') d'un axe (3) pour permettre la rotation du plateau-support (2) jusqu'au contacteur (23) de fin de course venant débrayer l'électro-aimant (4') qui libère la clavette (4).

4. Dispositif selon la revendication 1,
caractérisé en ce qu'un joint (8) à pression ressort (8') vient plaquer contre la déformation (9) du support-plateau (2), ainsi que des brosses supérieures (10) et inférieures (10') souples mobiles et reprenant leur position initiale, permettant de préserver la zone réfrigérée (5) de la zone de chauffe (7) tout en permettant au plateau-support (2) et à son plat (11) leur passage de la zone réfrigérée (5) à la zone de chauffe (7) même pendant la période de rotation chauffante dans la zone de chauffe (7).

5. Dispositif selon la revendication 4,
caractérisé en ce que le joint (8) et la déformation (9) du support-plateau (2) sont de forme incurvée pour permettre et suivre la rotation du support-plateau (2) dans sa phase de cuisson ou de remise en température.

## Claims

1. Refrigeration and cooking system or heating system for automatic distribution of dishes or food trays allowing on-demand selection of cooking or heating one or several dishes (11) stored pending use in a refrigerated zone (5),
characterized in that it includes the tray supports (2) capable of moving around a vertical pivot (3) and being organized so that cooking or heating of a dish (11) takes place during the rotational movement of the tray support (2) on which is placed the said tray which passes the latter into the heating zone (7) of the device from a penetration point (A) up to the end of its travel (B) while maintaining part (13) of the tray support in the refrigerated zone (5).

2. Device as per claim 1 characterized in that a heating rail (12) takes over the heating of the tray (11) for the entire distance of its rotational movement as soon as it penetrates into the heating zone (7).

3. Device as per claim 1 characterized in that an electromagnet (4') allows a key (4) forming an integral part and situated at the center of one of the tray support edges (2) to be inserted into the spines (3') of a shaft (3) to allow rotation of the plate support (2) until contact with a end-of-travel limit switch (23) which releases the electro-magnet (4') which releases the key (4).

4. Device as per claim 1 characterized in that a seal (8) with spring (8') is forced against the deformation (9) of the tray support (2) together with the upper (10) and lower (10') mobile flexible bosses and adopt their initial position enabling the cooled zone (5) to be preserved in the heating zone (7) while allowing the support tray (2) and its dish (11) to pass from the refrigerated zone (5) to the heated zone (7) even during the heating rotation period in the heating zone (7).

5. Device as per claim 4 characterized in that the seal (8) and the deformation (9) of the tray support (2) are incurved to allow and follow the rotation of the tray support (2) in its cooking or heating phase.

## Patentansprüche

1. Vorrichtung zur Kühlung und zum Garen oder Aufwärmen von Nahrungsmitteln für die automatische Ausgabe von Gerichten oder Imbißtabletts mit der Möglichkeit nach Wunsch das Garen beziehungsweise das Aufwärmen eines oder mehrerer in einem gekühlten Bereich (5) aufbewahrten Gerichte (11) zu wählen, dadurch gekennzeichnet, daß sie mit Plattenträgern (2) ausgestattet ist, geeignet um eine vertikale Spindel (3) zu drehen und auf eine Weise angeordnet, daß das Garen bzw. Aufwärmen im Lauf einer Drehbewegung des Trägers (2) der Platte erfolgt, die das besagte Gericht enthält und dieses durch einen Heizbereich (7) der Vorrichtung von einem Einführungspunkt (A) bis zu seiner Endstation (B) führt, während ein Teil (13) der Platte in dem gekühlten Bereich (5) verbleibt.

2. Vorrichtung nach Anspruch 1, dadurch gekennzeichnet, daß eine Heizschiene (12) das Erhitzen des Gerichts (11) ab seiner Einführung in den Heizbereich (7) und über die gesamte Dauer seiner Drehbewegung gewährleistet.

3. Vorrichtung nach Anspruch 1, gekennzeichnet durch einen Elektromagnet (4'), der eine kraftschlüssig und mittig an einem Rand des Plattenträgers (2) angebrachte Zunge (4) veranlaßt, in die Hohlkehlen (3') einer Spindel (3) einzugreifen, um die Rotation des Plattenträgers (2) bis zu dem Endschalter (23) zu ermöglichen, der den Elektromagnet (4') abschaltet, wodurch die Zunge (4) freigesetzt wird.

4. Vorrichtung nach Anspruch 1, gekennzeichnet durch eine Dichtung (8), die mit Federdruck (8') an der Formung (9) des Plattenträgers (2) anliegt sowie durch flexible und bewegliche obere (10) und untere (10') Bürsten, welche ihre ursprüngliche Position wieder einnehmen, die ermöglicht, den gekühlten Bereich (5) von dem beheizten Bereich (7) zu schützen, mit gleichzeitig der Möglichkeit der Passage des Plattenträgers (2) und seines Gerichts (11) von dem gekühlten Bereich (5) in den Heizbereich (7), selbst während der beheizten Rotation im Heizbereich (7).

5. Vorrichtung nach Anspruch 4, dadurch gekennzeichnet, daß die Dichtung (8) und die Formung (9) des Plattenträgers (2) gekrümmt sind, um die Rotation des Plattenträgers (2) in seiner Gar- bzw. Aufwärmphase zu ermöglichen und ihr zu folgen.
